# EUROPEAN PATENT SPECIFICATION

(11) **EP 3 932 246 B1**
(45) Date of publication and mention of the grant of the patent: **03.04.2024**
(21) Application number: 20762326.5
(22) Date of filing: 19.02.2020
(51) Int. Cl.: A44C 25/00, A45D 19/00, A45D 29/00, B41M 3/00, C09K 9/02, G02B 5/22, G02B 5/23, A45D 31/00

(54) **COLOR-CHANGING METHOD FOR SURFACE SECTION**
FARBWECHSELVERFAHREN FÜR EINEN OBERFLÄCHENABSCHNITT
PROCÉDÉ DE CHANGEMENT DE COULEUR POUR SECTION DE SURFACE

(30) Priority: 27.02.2019 JP 2019033642
(43) Date of publication of application: 05.01.2022
(73) Proprietor: Koibuchi, Michio, Tokyo 195-0074 (JP)
(72) Inventor: Koibuchi, Michio, Tokyo 195-0074 (JP)
(74) Representative: Kuhnen & Wacker Patent- und Rechtsanwaltsbüro PartG mbB
(86) International application number: PCT/JP2020/006388
(87) International publication number: WO 2020/175254

(56) References cited:
- JP-A- H05 271 649
- JP-A- 2004 147 834
- JP-A- 2005 319 761
- JP-A- 2013 096 745
- US-A- 6 141 135
- US-B1- 6 437 346

## Description

### [Technical field]

The present invention relates to methods of reversibly changing the color of a part of or the entire surface (hereinafter, referred to as a "surface-forming portion") of an object having the surface, using a photochromic compound and light with wavelengths that induce photochromism of the photochromic compound.

### [Background art]

Conventionally, a technique for coloring the surface of objects having the surface, such as nails (including artificial nails; the same applies hereinafter) or bags, using electrochromism has been known from, for example, Patent Documents 1 and 2.

For organic electrochromic compounds, vivid color reactions for CMY (cyan, magenta, and yellow) have won success in being controlled electrically. These compounds, however, revert to their original color in a short time once the charge is removed. Hybrid (mixed) organic/inorganic electrochromic compounds are also under development. Still, they are similar to known electrochromic materials in that the colored state lasts for only a certain time after the removal of the charge and the color is restored. For this reason, these compounds are not suitable for use in applications involving changing the color of products (objects) and keeping this state for a long time. In addition, color changes of a surface-forming portion using a known electrochromic compound inevitably require an electrical system including a power supply due to electrical control of the color reactions, unfortunately lacking the versatility in this respect.

A phenomenon that a reversible transformation of a single compound between two isomers (A and B) of different colors without changing its molecular weight upon irradiation with light is known as photochromism. Photochromic materials that undergo photochromism are compounds that reversibly change their color upon irradiation with light with specific wavelengths. Among them, "solid-state multicolor photochromism" based on silver compounds is a reversible phenomenon in which solids change their color, upon irradiation with light with specific wavelengths, to a color corresponding to the wavelengths of the irradiated light and revert to their original color when irradiated with light other than ultraviolet.

Patent Document 3 discloses a photochromic layer on a substrate, coated with UVA and UVB blocking layers. The photochromic compounds are used in combination with ultraviolet wavelength-selective chemical blocks and their incorporation into optically clear polymer matrices.

There is a photochromic single-crystal (mixed crystal) compound prepared by incorporating three different compounds that undergo respective color changes from colorless to blue (1a), red (2a), and yellow (3a) when exposed to light with their appropriate wavelengths, in which the three compounds are very similar in their chemical structure but are different in the molecular state. This photochromic compound exhibits blue, red, and yellow colors upon irradiation with light with specific wavelengths. Polarized absorption spectrum analysis has demonstrated that the photochromic reaction (photochromism) of these three components still proceeds in the crystalline state. The photochromic compound indicated is single-crystal diarylethene, which can exhibit multicolor photochromism, i.e., reversible changes into various colors even in the single crystal. Note that the photochromic reaction of diarylethene is characterized by causing color changes in response to a narrow band of wavelengths in the ultraviolet spectrum, and each induced color tends to revert to the original color by wavelengths in the visible spectrum.

On the other hand, in the field of photo-sensitive materials for photographs such as silver halide color photographs (e.g., silver halide photo-sensitive materials), improving the light fastness of the materials has been an issue. Accordingly, the decrease in density (photochromism = photochromic reaction) due to exposure to light such as natural light is considered as a negative phenomenon, and various studies and developments have been made to suppress this phenomenon. By way of example, wavelength-cutoff agents that can block specific wavelengths, manufactured by Fujifilm Corporation, are commercially available under the trade name "COMFOGUARD" as specific-wavelength-cutoff agents capable of selectively cutting off specific unwanted wavelengths to prevent color fading and provide color reproducibility of silver halide photographs. This wavelength-cutoff agent allows users to tune the wavelengths of light to be cut off in 20 nm increments, and if necessary, freely choose the cut-off wavelengths in the region between ultraviolet and infrared.

The inventor of the present invention concentrated on a photochromic material's property that the photochromic compounds containing diarylethene mentioned above change their color reversibly in response to light in a specific band, as well as the function of the wavelength-cutoff agents which can cut off any wavelength in the region spanning from ultraviolet to infrared. The inventor then obtained findings that the color of the photochromic material that has changed to the desired color can be maintained for a required time under natural light by using a wavelength-cutoff agent that cuts off wavelengths in the desired band.

The color of an object having a surface covered with a specific photochromic compound can be converted to the desired color by exposing the object to light with specific wavelengths in the ultraviolet spectrum, which induce photochromism. Covering the object's surface with a wavelength-cutoff agent that blocks wavelengths in the ultraviolet spectrum of natural light to maintain the induced color allows the induced color to be maintained for a required time and prevents it from fading.

The inventor of the present invention further concentrated on a diarylethene's property that it is more susceptible to the ultraviolet wavelengths but not to the visible wavelengths, and obtained findings that the wavelengths in the ultraviolet spectrum of natural light can be blocked and that the induced color can be maintained for a certain time, by means of: covering the surface of the object (the surface-forming portion of a product) with diarylethene; exposing the surface of the diarylethene to light in the ultraviolet range to convert the color of the diarylethene to the desired color; and then coating the surface-forming portion with a wavelength-cutoff agent that cuts off wavelengths in the ultraviolet spectrum of natural light.

### [Related art document]

### [Patent document]

Patent document 1: JP-A-2017-153784
Patent document 2: JP-A-2018-187106
Patent document 3: US6437346 B1

### [Summary of invention]

### [Technical problem]

The following paragraphs refer to several aspects of the invention. The scope of the invention, however, is defined by the subject-matter of the appended claims.

A first object of the present invention is to provide a color-changing method comprising: covering a part of or the entire surface of an object (hereinafter, referred to as a "surface-forming portion") with a photochromic substance (hereinafter, also referred to as a "photochromic compound" or a "photochromic material"); exposing the surface-forming portion to light with specific wavelengths to change the color of the surface-forming portion; and exposing the color-changed surface-forming portion to light (wavelengths) other than the specific wavelengths to restore the original color.

A second object of the present invention is to provide a method with which the color of the surface-forming portion can be changed to an intended color (desired color) using the photochromic property of diarylethene, and then the induced color can be maintained for a certain time.

### [Solution to problem]

The configuration of a first invention made for the purpose of achieving the first object mentioned above, comprising depositing a photochromic substance on a surface-forming portion of an object by, for example, spreading the substance, and then exposing the surface of the deposited photochromic substance to light in an ultraviolet spectrum to change the color of the photochromic substance by photochromism. In irradiating the light in the ultraviolet range, the surface may be covered with a wavelength-cutoff agent that blocks wavelengths of illumination light and/or natural light, including ultraviolet radiation.

The configuration of a second invention which can achieve the second object mentioned above is characterized by comprising: depositing diarylethene as a photochromic substance on a surface-forming portion of an object by, for example, spreading the substance; exposing the surface of the deposited diarylethene to light with specific wavelengths to change the color of the diarylethene to the desired color; and then covering the color-changed surface with a wavelength-cutoff agent that blocks wavelengths in the ultraviolet spectrum of natural light and/or illumination light, thereby keeping the color-changed state for a certain time.

Hereafter, "the present invention" as used herein refers to a concept that includes the first and second inventions described above.

An example of the photochromic substance to be deposited on the surface-forming portion is an organic photochromic compound that changes its color to a color in the visible region corresponding to the specific wavelengths upon irradiation with light with the specific wavelengths. This organic photochromic compound is, for example, single-crystal diarylethene comprising organic molecules with three different structures. The indicated diarylethene exhibits red, yellow, and blue colors by light at 370 nm, 380 nm, and 405 nm light, respectively, in the ultraviolet region, and each induced color reverts to the original color by light with 450 nm or longer wavelengths in the visible region. The wavelengths of light at 370 nm, 380 nm, and 380 nm mentioned above fall within the ultraviolet region, but the bands are near the visible region.

In the present invention, inorganic photochromic compounds, such as titanium dioxide loaded with Ag nanoparticles, can be used as photochromic substances.

Inorganic photochromic compounds can be used to change the color of the surface-forming portion of an object by: depositing one on the surface-forming portion of the object; then exposing the surface of the deposited photochromic material to light with wavelengths of any color (desired color) in the visible region to change the color of the surface-forming portion to the color of the irradiated light (desired color); and covering the color-changed surface with a wavelength-cutoff agent that blocks wavelengths of natural light, including ultraviolet radiation.

Upon irradiation with light with specific wavelengths in the visible spectrum, inorganic photochromic compounds develop color corresponding to it. Thus, the wavelength-cutoff agent used for being pre-coated on the surface of an inorganic photochromic compound is the one that cuts off wavelengths of natural light, including ultraviolet radiation, other than the light with specific wavelengths in the visible spectrum irradiated for the color change.

The surface-forming portions to which the present invention can be applied include the entire or a part of the surface-forming portion of any of the following having a colored surface: nails, artificial nails, lips, hair on one's body including hair on one's head, eyeglasses, watches, jewelry including rings, bracelets, and necklaces (hereinafter referred to as "jewelry"), bags, shoes, textiles including neckties, scarves, and handkerchiefs, natural and synthetic fibers, bodies of vehicles including motorcycles and cars, wall materials, indoor equipment including pieces of furniture, outdoor equipment including signboards, and wall surfaces including ceilings, floors, and side walls of buildings.

In the implementation of the first invention, a surface-forming portion of an object on which a photochromic material has been deposited is prepared, and light-emitting means configured to emit light with wavelengths whose range can be arbitrarily determined for the surface-forming portion is prepared. Then, light with specific wavelengths in, for example, the ultraviolet spectrum is projected from the light-emitting means to the surface-forming portion to induce photochromism of the photochromic substance, thereby changing the color of the surface-forming portion to the desired color.

In the implementation of the second invention, diarylethene is prepared as a photochromic substance. This is deposited on the surface-forming portion of the object by, for example, coating, and the surface of the deposited diarylethene is exposed to light with specific wavelengths in the ultraviolet spectrum to change the diarylethene to the desired color. When the surface that has changed to the desired color is covered with a wavelength-cutoff agent that blocks specific wavelengths in the ultraviolet spectrum, the color of the color-changed surface can be maintained for a certain time.

The aforementioned photochromic substance is an organic photochromic compound, diarylethene being example. It has a property of changing the color, upon irradiation with light with specific wavelengths in the ultraviolet spectrum, to a color in the visible light region corresponding to the specific wavelengths irradiated and reverts to its original color upon irradiation with light with 450 nm or longer wavelengths in the visible spectrum.

The aforementioned diarylethene has the property of photochromism (change in color in the forward direction) that occurs under the influence of light with wavelengths in the ultraviolet spectrum and photochromism (change in color in the reverse direction) in which the color-changed surface returns to its original color in response to the light with wavelengths in the visible spectrum. Thus, by making the forward and the reverse color-changing vectors compete with each other using a wavelength-cutoff agent for the ultraviolet, it is possible to prevent the induced desired color from fading.

The light-emitting means can be any device capable of emitting light with specific wavelengths chosen randomly from the ultraviolet to infrared range. The wavelength-cutoff agent that cuts off the specific wavelengths used should allow users to tune the wavelengths to be cut off in 20 nm increments and block them.

The method of changing the color of the surface-forming portion according to the present invention can be applied to three-dimensional objects, such as car bodies, as a new exterior decoration method for the surface-forming portion that replaces conventional decoration methods such as painting and wrapping. An example of the specific method is as follows.

According to the first invention, a photochromic compound is applied to the outer surface of a 3D object, such as a car body. A 3D scanner scans the surface of the applied layer to obtain 3D scan data for modeling and analyzing the object's shape. Then, the analyzed object is mapped with a pre-selected graphic pattern. The mapped object is irradiated with light with specific wavelengths in the ultraviolet spectrum during or after the mapping to change the color of the photochromic compound that has applied to the object. A graphic pattern is applied to a 3D object in this way, and the color of the object can be changed to the desired color. The generated color can be reversed by irradiating light at 450 nm or longer in the visible spectrum.

In the second invention, a photochromic compound is applied to the outer surface of a 3D object. A 3D scanner scans the 3D object with the surface of the applied layer to obtain 3D scan data for modeling and analyzing the shape of the 3D object. Then, the analyzed 3D object is mapped with a pre-selected graphic pattern. The mapped object is irradiated with light with specific wavelengths in the ultraviolet spectrum during or after the mapping to change the color of the photochromic compound that has applied to the 3D object to the desired color, and then a wavelength-cutoff agent that can cut off ultraviolet radiation contained in natural light is coated over it. This allows the photochromic color-changed state to be kept for a predetermined time.

As described above, according to the present invention, it is possible to add a graphic pattern to a 3D object and change the color of that object. The original color can be reversed to undo the generated color by irradiating it with visible light at 450 nm or longer. When one do not want to go back to the original color, the color-changed object is coated with a wavelength-cutoff agent in the visible region of 450 nm or longer. Examples of the 3D objects include, in addition to the car bodies, nails, artificial nails, lips, hair on one's head, eyebrows, beards, eyeglasses, watches, jewelry including rings, bracelets, and necklaces (hereinafter referred to as "jewelry"), bags, shoes, textiles including neckties, scarves, and handkerchiefs, natural and synthetic fibers, motorcycle bodies, wall materials, indoor equipment including pieces of furniture and ornaments, outdoor equipment including signboards, and wall surfaces including ceilings, floors, and side walls of buildings.

Light in the ultraviolet range used in the present invention is classified according to wavelengths into near UV with wavelengths of 380-200 nm, far UV (FUV) or vacuum UV (VUV) with wavelengths of 200-10 nm, and extreme UV (EUV or XUV) with wavelengths of 121-10 nm. From the viewpoint of human health and environmental impact, near UV is sometimes further divided into UVA (400-315 nm), UVB (315-280 nm), and UVC (< 280 nm). Unlike the above FUV, deep UV (DUV) in photolithography and laser technology refers to ultraviolet radiation with 300 nm or shorter wavelengths. Sunlight contains ultraviolet radiation with wavelengths of UVA, UVB, and UVC, of which UVA and UVB pass through the ozone layer and reach the earth's surface. UVC, however, is significantly absorbed by materials and cannot normally pass through the atmosphere. UVA accounts for 99% of the UV radiation that reaches the earth's surface (reactions in the ozone layer produces some UVC).

In the present invention, diarylethene, which is applied to the surface of a product, exhibits the three primary colors of cyan, magenta, and yellow simultaneously in response to wavelengths in the ultraviolet spectrum produced by the light-emitting means, producing a black appearance of the product's surface. Then, the colored surface is exposed to light with specific wavelengths in the visible spectrum using the light-emitting means to fade the respective induced three primary colors with the irradiation output and time controlled, thereby to produce the desired color tone.

On the other hand, in the present invention, the diarylethene is coated with a wavelength-cutoff agent that can cut off UVA (400-315 nm), which is abundant in natural light. For this reason, the wavelengths in the ultraviolet spectrum projected from the light-emitting means to the diarylethene comprise specific wavelengths such as UVB (315-280 nm) and UVC (< 280 nm), which are minor components of natural light. Here, increasing the output of the light-emitting means can complement the coloration of the maximum density.

In the present invention, the wavelength-cutoff agent that can block UVA, which is abundant in natural light, is used for inducing colors of diarylethene. Thus, the coloration is not affected by the ultraviolet radiation in natural light and only the visible light fades the color. The fading caused by the visible light takes several minutes to several hours.

With the present invention, any induced color can be maintained for a certain time under natural or illumination light, taking advantage of the following features: instantaneous production of black appearance of diarylethene from the three primary colors upon irradiation of wavelengths in the ultraviolet spectrum; color tuning of the black colored surface with light with specific wavelengths in the visible spectrum; and gradual fading caused by the visible light only, which is not affected by ultraviolet radiation, using a wavelength-cutoff agent that cuts off UVA. [Brief description of drawings]

[Fig. 1] An explanatory diagram schematically illustrating a color-changing method according to the present invention being applied to nails (fingernails, artificial nails).
[Fig. 2] An explanatory diagram schematically illustrating how a color-changing method according to the present invention is applied to a car.
[Fig. 3] A diagrammatic flow diagram for explaining steps of combining a color-changing method according to the present invention with the mapping of a car body with a graphic pattern.

### [Description of embodiments]

Next, an embodiment for implementing the method of the present invention is described with reference to the drawings.

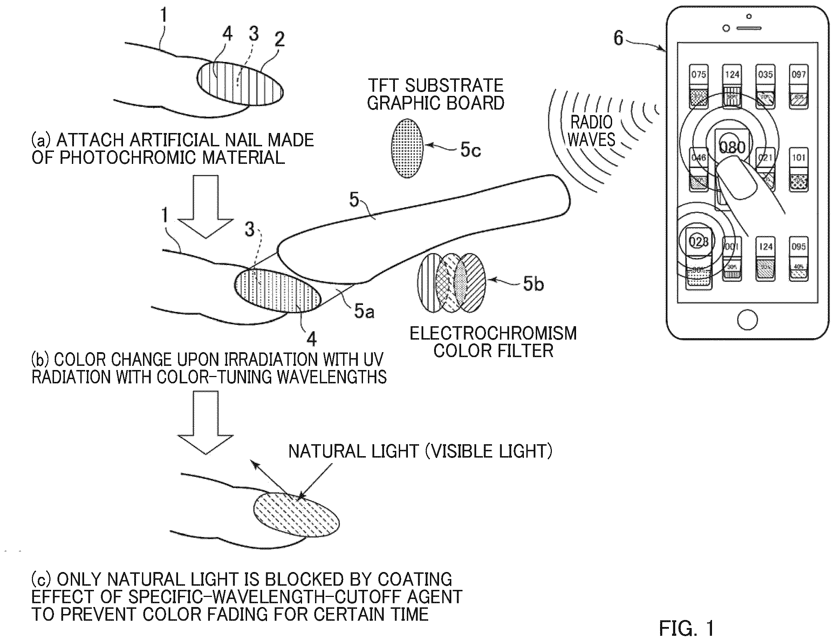

Fig. 1 illustrates the application of the present invention to changing the color of a nail. The reference numerals 1 and 2 represent a human finger and an artificial nail attached to the nail of the finger, respectively. The artificial nail 2 can be either a plastic nail with an organic photochromic compound applied as a photochromic material, or an organic photochromic compound formed into a nail shape.

The artificial nail 2 in the step (a) in Fig. 1 has a photochromic material 3 coated with a wavelength-cutoff agent 4 that cuts off specific wavelengths in the ultraviolet spectrum. In the next step (b), the artificial nail 2 attached to the nail of the finger 1 is irradiated with light in the ultraviolet range 5a, which is different from the specific wavelengths, from a light-emitting means 5. In Fig. 1, the reference numeral 6 represents a light source control unit that chooses a plurality of specific wavelengths in the ultraviolet spectrum emitted from the light-emitting means 5, with association to the colors intended to be induced, and wirelessly supplies a control signal to the light-emitting means to instruct emission of the chosen specific wavelengths. As an example, the color of the artificial nail 2 can be developed as (changed to) the desired color by exposing it to light at 370 nm, 380 nm, or 405 nm when the desired color is red, yellow, or blue, respectively.

For the coating of the wavelength-cutoff agent 4, which cuts off wavelengths in the ultraviolet spectrum other than the aforementioned irradiated wavelengths, the wavelength-cutoff agent 4 can be coated after irradiating the photochromic material 3 with light with wavelengths for inducing the desired color from the light-emitting means 5 to turn the photochromic material 3 into the desired color. The timing of the coating of the wavelength-cutoff agent 4 in the following examples is the same as in the above example in that it can be after the color of the photochromic material 3 has been changed. For the above wavelength-cutoff agent 4, the wavelengths to be cut off are 400 nm to 280 nm contained in natural light, and preferably at least 400 nm to 315 nm. The term "ultraviolet radiation" and "ultraviolet wavelength" are interchangeably used herein with wavelengths in the ultraviolet spectrum.

The light-emitting means 5 in Fig. 1 has a battery as a power source, a lamp as a light source, and a control board inside. In the case where the photochromic material 4 is an inorganic one that changes its color to the color of the irradiated light, a color filter is placed in front of the light source. In the case where a picture or other graphic is projected on the artificial nail 2, a graphic board made of liquid crystal or other material is placed in front of the light source.

The photochromic material 3 of the artificial nail 2 changes, upon irradiation with the light with specific wavelengths 5a, its color to a color of wavelengths in the visible spectrum corresponding to the irradiated specific wavelengths. For the generated color, the surface of the photochromic material 3 is coated with a wavelength-cutoff agent 4 that can cut off ultraviolet radiation of natural light. Thus, the ultraviolet radiation is cut off and the generated color does not fade for a certain time (see the step (c)).

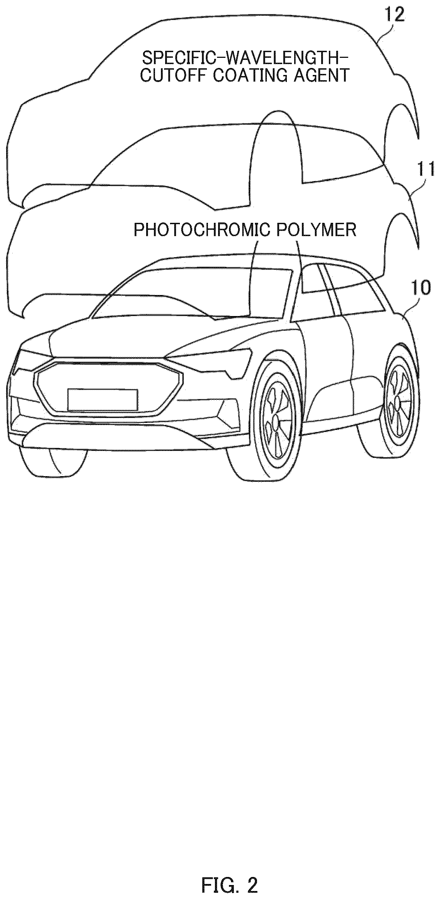

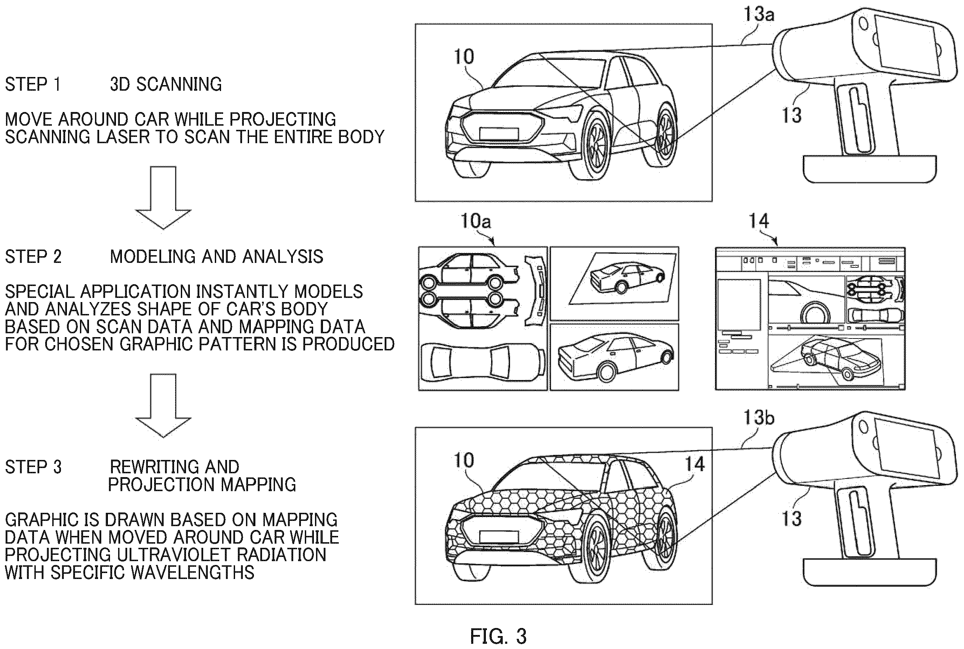

Next, an example in which the color-changing method of the present invention is applied in combination with mapping of a car body with a graphic pattern is described with reference to Figs. 2 and 3.

Fig. 2 shows a conceptual diagram illustrating a case where the color-changing method of the present invention is applied to a car body. In Fig. 2, a photochromic material 11 is applied to a car body 10. For this purpose, used is a specially-adapted handheld device (hereinafter referred to as a "rewritable booster 13") with 3D scanning and projection mapping functions which emits light with specific wavelengths that change the color of and/or patterns on an object (the body 10). This allows instant changing of the color and/or a graphic design of the car body 10 according to the scene, season, or mood of the day and reduction of an overwhelming amount of time and cost compared to conventional painting or wrapping to provide significant user benefits. Referring to Fig. 3, the above example is described in order of performing process steps. It should be noted that a UV wavelength-cutoff agent 12 is coated after the color of the photochromic material 11 has been changed by light irradiation with the rewritable booster 13.

In the step 1, the car body 10 is scanned in 3D. Specifically, the rewritable booster 13 moves all around the car to scan the entire car body 10 while projecting a scanning laser 13a onto the car body 10.

In the step 2, the shape of the car body 10 is instantly modeled and analyzed 10a using a special application software based on the scan data obtained in the step 1, and mapping data 13b for a pre-selected graphic pattern 14 is produced.

In the step 3, the rewritable booster 13 moves all around the car while projecting light with specific wavelengths in the ultraviolet spectrum to the car body 10 and projects the mapping data 13b generated in the step 2 onto the car body 10. As a result, the photochromic material 1 1 on the surface of the car body 10 changes to a specific color, and the graphic pattern 14 based on the mapping data 13b is drawn (mapped) on the car body 10.

As described above, the present invention makes it possible to change the color of the car body 10 to the desired color and map it with the desired graphic pattern simultaneously, allowing significant reduction of the time and effort required for painting car bodies or mapping them with graphics using conventional methods.

Not only car users but also car dealers can enjoy the aforementioned advantages. This is because a single car can be displayed in multiple colors and graphics by applying the method of the present invention to cars to be displayed in a shop.

The present invention described above can be applied to the following as an object: nails, artificial nails, lips, hair on one's body including hair on one's head, eyeglasses, watches, jewelry including rings, bracelets, and necklaces, bags, shoes, textiles including neckties, scarves, and handkerchiefs, natural and synthetic fibers, bodies of vehicles including motorcycles and cars, wall materials, indoor equipment including pieces of furniture and ornaments, outdoor equipment including signboards, and wall surfaces including ceilings, floors, and side walls of buildings.

### [Reference signs list]

- 1: finger
- 2: artificial nail
- 3: photochromic material
- 4: wavelength-cutoff agent
- 5: light-emitting means
- 6: light source control unit

## Claims

1. A method of changing a color of a surface-forming portion comprising:
depositing a photochromic substance on a surface-forming portion of an object; and
applying a wavelength-cutoff agent to a surface of the deposited photochromic substance in changing a color of the photochromic substance by photochromism by irradiating the surface of the deposited photochromic substance with light in an ultraviolet range, before the irradiation of the light in the ultraviolet range, the wavelength-cutoff agent selectively blocking light with wavelengths of UVA contained in natural light and/or illumination light, the wavelength-cutoff agent allowing light with wavelengths of visible spectrum, UVB, and UVC to pass through the wavelength-cutoff agent.

2. A method of changing a color of a surface-forming portion comprising:
depositing a photochromic substance on a surface-forming portion of an object; and
applying a wavelength-cutoff agent to the surface of the deposited photochromic substance in changing a color of the photochromic substance by photochromism by irradiating the surface of the deposited photochromic substance with light in an ultraviolet range, after the color of the photochromic substance has been changed by the irradiation with the light in the ultraviolet range, the wavelength-cutoff agent selectively blocking a wavelength of UVA contained in natural light and/or illumination light, the wavelength-cutoff agent allowing light with wavelengths of visible spectrum, UVB, and UVC to pass through the wavelength-cutoff agent.

3. The method according to Claim 1 or 2, wherein the wavelength-cutoff agent is applied on the photochromic substance so that the amount of light with wavelengths blocked by the wavelength-cutoff agent is kept for a certain time.

4. The method according to any one of Claims 1 to 3, wherein wavelengths in the ultraviolet spectrum to be cut off by the wavelength-cutoff agent are 400 nm to 280 nm, preferably 400 nm to 315 nm.

5. The method according to any one of Claims 1 to 4, wherein the surface-forming portion whose color has been changed by photochromism returns to an original color of the surface-forming portion upon irradiation with light in a visible range.

6. The method according to any one of Claims 1 to 5, wherein the photochromic substance deposited on the surface-forming portion is an organic photochromic compound that turns, upon irradiation with light with specific wavelengths in an ultraviolet spectrum, to a color in a visible region corresponding to the irradiated specific wavelengths.

7. The method according to Claim 6, wherein the organic photochromic compound is a single-crystal diarylethene comprising three organic molecules having different structures.

8. The method according to any one of Claims 1 to 7, wherein the surface-forming portion of the object is that of any one of nails, artificial nails, lips, hair on one's body including hair on one's head, eyeglasses, watches, jewelry including rings, bracelets, and necklaces, bags, shoes, textiles including neckties, scarves, and handkerchiefs, natural and synthetic fibers, bodies of vehicles including motorcycles and cars, wall materials, indoor equipment including pieces of furniture and ornaments, outdoor equipment including signboards, and wall surfaces including ceilings, floors, and side walls of buildings.

9. A system for changing a color of a surface-forming portion comprising:
a surface-forming portion of an object, a photochromic substance deposited on the surface-forming portion;
light-emitting means configured to emit light including at least one of UVB and UVC; and
application means applying a wavelength-cutoff agent to the surface-forming portion on which the photochromic substance has been deposited, by driving the wavelength-cutoff agent before the light-emitting means is driven, the wavelength-cutoff agent selectively blocking a wavelength of UVA to the surface-forming portion on which the photochromic substance has been deposited, the wavelength-cutoff agent allowing light with wavelengths of visible spectrum, UVB, and UVC to pass through the wavelength-cutoff agent., wherein
the light including at least one of UVB and UVC is projected from the light-emitting means onto the surface-forming portion to cause the photochromic substance to induce photochromism and change a color of the surface-forming portion.

10. A system for changing a color of a surface-forming portion comprising:
a surface-forming portion with a photochromic substance deposited on a surface-forming portion of an object;
light-emitting means configured to emit light including at least one of UVB and UVC; and
application means applying a wavelength-cutoff agent to the surface-forming portion after the light-emitting means has been driven and the photochromic substance has undergone a change in color by photochromism, the wavelength-cutoff agent selectively blocking a wavelength of UVA to the surface-forming portion on which the photochromic substance has been deposited, the wavelength-cutoff agent allowing light with wavelengths of visible spectrum, UVB, and UVC to pass through the wavelength-cutoff agent., wherein
the light including at least one of UVB and UVC is projected from the light-emitting means onto the surface-forming portion to cause the photochromic substance to induce photochromism and change a color of the surface-forming portion.

11. The system according to Claim 9 or 10, wherein the photochromic substance is an organic photochromic compound that changes its color, upon irradiation with light with specific wavelengths in an ultraviolet spectrum, to a color in a visible region corresponding to the irradiated specific wavelengths, and reverts to its original color upon irradiation with light in a visible range.

12. The system according to any one of Claims 9 to 11, wherein the surface-forming portion is that of any one of nails, artificial nails, lips, hair on one's body including hair on one's head, eyeglasses, watches, jewelry including rings, bracelets, and necklaces, bags, shoes, textiles including neckties, scarves, and handkerchiefs, natural and synthetic fibers, bodies of vehicles including motorcycles and cars, wall materials, indoor equipment including pieces of furniture and ornaments, outdoor equipment including signboards, and wall surfaces including ceilings, floors, and side walls of buildings.

13. The system according to any one of Claims 9 to 12, wherein the light-emitting means can emit light with specific wavelengths in a region between ultraviolet and infrared.

14. The system according to any one of Claims 9 to 13, wherein the wavelength-cutoff agent allows tuning of wavelengths to be cut off in 20 nm increments and cutting them off.

15. A method of changing a color of an object by adding a graphic pattern to a three-dimensional object, comprising:
applying a photochromic compound to a surface of a three-dimensional object such as a car body;
scanning the object with a 3D scanner to obtain 3D scan data and modeling and analyzing an object's shape;
mapping the analyzed object with a pre-selected graphic pattern;
irradiating the mapped object with light including at least one of UVA and UVB to change a color of the photochromic compound applied to the object, during or after the mapping; and
coating the object with a wavelength-cutoff agent that selectively cuts off a wavelength of UVA, after irradiating the mapped object with light with specific wavelengths in an ultraviolet spectrum to change a color of the photochromic compound that has been applied to the object, during or after the mapping, the wavelength-cutoff agent allowing light with wavelengths of visible spectrum, UVB, and UVC to pass through the wavelength-cutoff agent..

16. A method of changing a color of an object by adding a graphic pattern to a three-dimensional object, comprising:
applying a photochromic compound to a surface of a three-dimensional object such as a car body;
scanning the object with a 3D scanner to obtain 3D scan data and modeling and analyzing an object's shape;
mapping the analyzed object with a pre-selected graphic pattern; and
coating the object with a wavelength-cutoff agent that cuts off a wavelength of UVA before the photochromic compound undergoes a change in color, when the mapped object is irradiated with light including at least one of UVA and UVB to change a color of the photochromic compound that has been applied to the object, during or after the mapping, the wavelength-cutoff agent allowing light with wavelengths of visible spectrum, UVB, and UVC to pass through the wavelength-cutoff agent..

17. The method according to Claim 15 or 16, wherein the three-dimensional object is a nail, an artificial nail, a lip, hair on one's body including hair on one's head, eyeglasses, a watch, jewelry including a ring, a bracelet, and a necklace, a bag, shoes, a textile including a necktie, a scarf, and a handkerchief, a natural or synthetic fiber, a body of a vehicle including a motorcycle and a car, a wall material, indoor equipment including a piece of furniture and an ornament, outdoor equipment including a signboard, and a wall surface including a ceiling, a floor, and a side wall of a building.

## Patentansprüche

1. Verfahren zum Ändern einer Farbe eines oberflächenbildenden Teils aufweisend:
Abscheiden einer photochromen Substanz auf einem oberflächenbildenden Teil eines Objekts; und
Anwenden eines Wellenlängensperrmittels auf eine Oberfläche der abgeschiedenen photochromen Substanz beim Ändern einer Farbe der photochromen Substanz durch Photochromie durch Bestrahlen der Oberfläche der abgeschiedenen photochromen Substanz mit Licht in einem ultravioletten Bereich, vor der Bestrahlung des Lichts in dem ultravioletten Bereich, wobei das Wellenlängensperrmittel selektiv Licht mit Wellenlängen von UVA, das in natürlichem Licht und/oder Beleuchtungslicht enthalten ist, auswählt, und wobei das Wellenlängensperrmittel Licht mit Wellenlängen des sichtbaren Spektrums, UVB und UVC durch das Wellenlängensperrmittel durchlässt.

2. Verfahren zum Ändern einer Farbe eines oberflächenbildenden Teils aufweisend:
Abscheiden einer photochromen Substanz auf einem oberflächenbildenden Teil eines Objekts; und
Anwenden eines Wellenlängensperrmittels auf die Oberfläche der abgeschiedenen photochromen Substanz beim Ändern einer Farbe der photochromen Substanz durch Photochromie durch Bestrahlen der Oberfläche der abgeschiedenen photochromen Substanz mit Licht in einem ultravioletten Bereich, nachdem die Farbe der photochromen Substanz durch die Bestrahlung mit dem Licht in dem ultravioletten Bereich geändert wurde, wobei das Wellenlängensperrmittel selektiv eine Wellenlänge von UVA blockiert, die in natürlichem Licht und/oder Beleuchtungslicht enthalten ist, und wobei das Wellenlängensperrmittel Licht mit Wellenlängen des sichtbaren Spektrums, UVB und UVC durch das Wellenlängensperrmittel durchlässt.

3. Verfahren gemäß Anspruch 1 oder 2, wobei das Wellenlängensperrmittel so auf die photochrome Substanz angewendet wird, dass die Menge an Licht mit Wellenlängen, die durch das Wellenlängensperrmittel blockiert werden, für eine bestimmte Zeit gehalten wird.

4. Verfahren gemäß einem der Ansprüche 1 bis 3, wobei die Wellenlängen im ultravioletten Spektrum, die durch das Wellenlängensperrmittel gesperrt werden sollen, 400 nm bis 280 nm, vorzugsweise 400 nm bis 315 nm, betragen.

5. Verfahren gemäß einem der Ansprüche 1 bis 4, wobei der oberflächenbildende Teil, dessen Farbe durch Photochromie verändert wurde, bei Bestrahlung mit Licht im sichtbaren Bereich wieder die ursprüngliche Farbe des oberflächenbildenden Teils annimmt.

6. Verfahren gemäß einem der Ansprüche 1 bis 5, wobei es sich bei der auf dem oberflächenbildenden Teil abgeschiedenen photochromen Substanz um eine organische photochrome Verbindung handelt, die bei Bestrahlung mit Licht mit spezifischen Wellenlängen in einem ultravioletten Spektrum in eine Farbe in einem sichtbaren Bereich übergeht, die den bestrahlten spezifischen Wellenlängen entspricht.

7. Verfahren gemäß Anspruch 6, wobei die organische photochrome Verbindung ein einkristallines Diarylethen ist, das drei organische Moleküle mit unterschiedlichen Strukturen aufweist.

8. Verfahren gemäß einem der Ansprüche 1 bis 7, wobei der oberflächenbildende Teil des Objekts derjenige von Nägeln, künstlichen Nägeln, Lippen, Körperhaaren einschließlich Kopfhaaren, Brillen, Uhren, Schmuck einschließlich Ringen, Armbändern und Halsketten, Taschen, Schuhen, Textilien einschließlich Krawatten, Schals und Taschentücher, natürliche und synthetische Fasern, Fahrzeugkarosserien einschließlich Motorrädern und Autos, Wandmaterialien, Innenausstattung einschließlich Möbelstücken und Ornamenten, Außenausstattung einschließlich Schildern und Wandoberflächen einschließlich Decken, Böden und Seitenwänden von Gebäuden ist.

9. System zum Ändern einer Farbe eines oberflächenbildenden Teils aufweisend:
einen oberflächenbildenden Teil eines Objekts, eine photochrome Substanz, die auf dem oberflächenbildenden Teil abgeschieden ist;
lichtemittierende Mittel, die konfiguriert sind, Licht zu emittieren, das mindestens eines von UVB und UVC enthält; und
Anwendungsmittel, die ein Wellenlängensperrmittel auf den oberflächenbildenden Teil anwenden, auf dem die photochrome Substanz abgeschieden wurde, durch Steuern des Wellenlängensperrmittels, bevor das lichtemittierende Mittel gesteuert wird, wobei das Wellenlängensperrmittel selektiv eine Wellenlänge von UVA für den oberflächenbildenden Teil blockiert, auf dem die photochrome Substanz abgeschieden wurde, wobei das Wellenlängensperrmittel Licht mit Wellenlängen des sichtbaren Spektrums, UVB und UVC durch das Wellenlängensperrmittel durchlässt,
wobei das Licht, das mindestens eines von UVB und UVC enthält, von den lichtemittierenden Mitteln auf den oberflächenbildenden Teil projiziert wird, um die photochrome Substanz zu veranlassen, Photochromie zu induzieren und eine Farbe des oberflächenbildenden Teils zu ändern.

10. System zum Ändern einer Farbe eines oberflächenbildenden Teils aufweisend:
einen oberflächenbildenden Teil mit einer photochromen Substanz, die auf einem oberflächenbildenden Teil eines Objekts angewendet ist;
lichtemittierende Mittel, die konfiguriert sind, Licht zu emittieren, das mindestens eines von UVB und UVC enthält; und
Anwendungsmittel, die ein Wellenlängensperrmittel auf den oberflächenbildenden Teil anwenden, nachdem das lichtemittierende Mittel gesteuert wurde und die photochrome Substanz eine Farbänderung durch Photochromie erfahren hat, wobei das Wellenlängensperrmittel selektiv eine Wellenlänge von UVA für den oberflächenbildenden Teil, auf dem die photochrome Substanz abgeschieden wurde, blockiert, wobei das Wellenlängensperrmittel Licht mit Wellenlängen des sichtbaren Spektrums, UVB und UVC durch das Wellenlängensperrmittel durchlässt,
wobei das Licht, das mindestens eines von UVB und UVC enthält, von den lichtemittierenden Mitteln auf den oberflächenbildenden Teil projiziert wird, um die photochrome Substanz zu veranlassen, Photochromie zu induzieren und eine Farbe des oberflächenbildenden Teils zu ändern.

11. System gemäß Anspruch 9 oder 10, wobei es sich bei der photochromen Substanz um eine organische photochrome Verbindung handelt, die bei Bestrahlung mit Licht mit spezifischen Wellenlängen in einem ultravioletten Spektrum ihre Farbe in eine Farbe in einem sichtbaren Bereich ändert, die den bestrahlten spezifischen Wellenlängen entspricht, und bei Bestrahlung mit Licht in einem sichtbaren Bereich zu ihrer ursprünglichen Farbe zurückkehrt.

12. System gemäß einem der Ansprüche 9 bis 11, wobei der oberflächenbildende Teil derjenige von Nägeln, künstlichen Nägeln, Lippen, Körperhaaren einschließlich Kopfhaaren, Brillen, Uhren, Schmuck einschließlich Ringen, Armbändern und Halsketten, Taschen, Schuhen, Textilien einschließlich Krawatten, Schals und Taschentücher, natürliche oder synthetische Fasern, Fahrzeugkarosserien einschließlich Motorrädern und Autos, Wandmaterialien, Innenausstattung einschließlich Möbelstücken und Ornamenten, Außenausstattung einschließlich Schildern und Wandoberflächen einschließlich Decken, Böden und Seitenwänden von Gebäuden ist.

13. System gemäß einem der Ansprüche 9 bis 12, wobei die lichtemittierenden Mittel Licht mit spezifischen Wellenlängen in einem Bereich zwischen Ultraviolett und Infrarot emittieren können.

14. System gemäß einem der Ansprüche 9 bis 13, wobei das Wellenlängensperrmittel ermöglicht, die zu sperrende Wellenlängen in 20 nm-Schritten abzustimmen und zu sperren.

15. Verfahren zum Ändern der Farbe eines Objekts durch Hinzufügen eines graphischen Musters zu einem dreidimensionalen Objekt, aufweisend:
Anwenden einer photochromen Verbindung auf der Oberfläche eines dreidimensionalen Objekts, wie z.B. einer Autokarosserie;
Scannen des Objekts mit einem 3D-Scanner, um 3D-Scandaten zu erhalten, und Modellieren und Analysieren der Form eines Objekts;
Abbilden des analysierten Objekts mit einem vorausgewählten grafischen Muster;
Bestrahlen des abgebildeten Objekts mit Licht, das mindestens eines von UVA und UVB enthält, um eine Farbe der auf das Objekt angewendeten photochromen Verbindung während oder nach dem Abbilden zu ändern; und
Beschichten des Objekts mit einem Wellenlängensperrmittel, das selektiv eine Wellenlänge von UVA sperrt, nachdem das abgebildete Objekt mit Licht mit spezifischen Wellenlängen in einem ultravioletten Spektrum bestrahlt wurde, um eine Farbe der photochromen Verbindung, die auf das Objekt angewendet wurde, während oder nach dem Abbilden zu ändern, wobei das Wellenlängensperrmittel Licht mit Wellenlängen des sichtbaren Spektrums, UVB und UVC durch das Wellenlängensperrmittel hindurchlässt.

16. Verfahren zum Ändern der Farbe eines Objekts durch Hinzufügen eines graphischen Musters zu einem dreidimensionalen Objekt, aufweisend:
Anwenden einer photochromen Verbindung auf der Oberfläche eines dreidimensionalen Objekts, wie z.B. einer Autokarosserie;
Scannen des Objekts mit einem 3D-Scanner, um 3D-Scandaten zu erhalten, und Modellieren und Analysieren der Form eines Objekts;
Abbilden des analysierten Objekts mit einem vorausgewählten grafischen Muster; und
Beschichten des Objekts mit einem Wellenlängensperrmittel, das eine Wellenlänge von UVA sperrt, bevor die photochrome Verbindung eine Farbänderung erfährt, wenn das abgebildete Objekt während oder nach dem Abbilden mit Licht bestrahlt wird, das mindestens eines von UVA und UVB enthält, um eine Farbe der photochromen Verbindung zu ändern, die auf das Objekt angewendet wurde, wobei das Wellenlängensperrmittel Licht mit Wellenlängen des sichtbaren Spektrums, UVB und UVC durch das Wellenlängensperrmittel hindurchlässt.

17. Verfahren gemäß Anspruch 15 oder 16, wobei das dreidimensionale Objekt ein Nagel, ein künstlicher Nagel, eine Lippe, Körperhaar einschließlich Kopfhaar, eine Brille, eine Uhr, Schmuck einschließlich eines Rings, eines Armbands und einer Halskette, eine Tasche, Schuhe, ein Textil einschließlich einer Krawatte, eines Schals und ein Taschentuch, eine natürliche oder synthetische Faser, eine Fahrzeugkarosserie einschließlich eines Motorrads und eines Autos, ein Wandmaterial, eine Innenausstattung einschließlich eines Möbelstücks und eines Ornaments, eine Außenausstattung einschließlich eines Schildes und eine Wandoberfläche einschließlich einer Decke, eines Bodens und einer Seitenwand eines Gebäudes ist.

## Revendications

1. Procédé de changement d'une couleur d'une partie formant une surface, le procédé comprenant les étapes suivantes:
déposer une substance photochromique sur une partie formant une surface d'un objet; et
appliquer un moyen de blocage de longueurs d'onde à une surface de la substance photochromique déposée en changeant une couleur de la substance photochromique par photochromisme en irradiant la surface de la substance photochromique déposée avec une lumière dans une bande des ultraviolets, avant l'irradiation de la lumière dans la bande des ultraviolets, le moyen de blocage de longueurs d'onde bloquant sélectivement une lumière de longueurs d'onde UVA contenue dans une lumière naturelle et/ou une lumière d'éclairage, le moyen de blocage de longueurs d'onde permettant à une lumière de longueurs d'onde du spectre visible, UVB et UVC de passer à travers le moyen de blocage de longueurs d'onde.

2. Procédé de changement d'une couleur d'une partie formant une surface, le procédé comprenant les étapes suivantes:
déposer une substance photochromique sur une partie formant une surface d'un objet; et
appliquer un moyen de blocage de longueurs d'onde à la surface de la substance photochromique déposée en changeant une couleur de la substance photochromique par photochromisme en irradiant la surface de la substance photochromique déposée avec une lumière dans une bande des ultraviolets, après que la couleur de la substance photochromique ait été changée par l'irradiation avec la lumière dans la bande des ultraviolets, le moyen de blocage de longueurs d'onde bloquant sélectivement une longueur d'onde d'UVA contenue dans une lumière naturelle et/ou une lumière d'éclairage, le moyen de blocage de longueurs d'onde permettant à une lumière avec des longueurs d'onde du spectre visible, UVB et UVC de passer à travers le moyen de blocage de longueurs d'onde.

3. Procédé selon la revendication 1 ou 2, dans lequel le moyen de blocage de longueurs d'onde est appliqué sur la substance photochromique de telle manière que la quantité de lumière ayant des longueurs d'onde bloquées par le moyen de blocage de longueurs d'onde soit maintenue pendant un certain temps.

4. Procédé selon l'une quelconque des revendications 1 à 3, dans lequel des longueurs d'onde du spectre ultraviolet à bloquer par le moyen de blocage de longueurs d'onde sont comprises entre 400 nm et 280 nm, préférentiellement entre 400 nm et 315 nm.

5. Procédé selon l'une quelconque des revendications 1 à 4, dans lequel la partie formant une surface dont la couleur a été changée par photochromisme revient à une couleur originale de la partie formant une surface lors d'une irradiation avec une lumière dans une bande visible.

6. Procédé selon l'une quelconque des revendications 1 à 5, dans lequel la substance photochromique déposée sur la portion formant une surface est un composé organique photochromique qui se transforme, lors d'une irradiation par une lumière ayant des longueurs d'onde spécifiques dans un spectre ultraviolet, en une couleur dans une bande visible correspondant aux longueurs d'onde spécifiques irradiées.

7. Procédé selon la revendication 6, dans lequel le composé organique photochromique est un diaryléthène monocristallin comprenant trois molécules organiques ayant des structures différentes.

8. Procédé selon l'une quelconque des revendications 1 à 7, dans lequel la partie formant une surface de l'objet est celle d'un des objets suivants: des ongles, des ongles artificiels, des lèvres, des poils sur le corps, y compris des cheveux sur la tête, des lunettes, des montres, des bijoux, y compris des bagues, des bracelets et des colliers, des sacs, des chaussures, des textiles, y compris des cravates, des foulards et des mouchoirs, des fibres naturelles et synthétiques, des carrosseries de véhicules, y compris des motos et des voitures, des matériaux pour des murs, des équipements pour l'intérieur, y compris des meubles et des ornements, des équipements pour l'extérieur, y compris des panneaux, et des surfaces des murs, y compris des plafonds, des sols et des murs latéraux des bâtiments.

9. Système pour changer une couleur d'une partie formant une surface, le système comprenant :
une partie formant une surface d'un objet, une substance photochromique déposée sur la partie formant une surface;
un moyen d'émission de lumière configuré pour émettre une lumière comprenant au moins un des UVB et UVC; et
un moyen d'application appliquant un moyen de blocage de longueurs d'onde à la partie formant une surface sur laquelle la substance photochromique a été déposée, en contrôlant le moyen de blocage de longueurs d'onde avant que le moyen d'émission de lumière soit contrôlé, le moyen de blocage de longueurs d'onde bloquant sélectivement une longueur d'onde d'UVA pour la partie formant une surface sur laquelle la substance photochromique a été déposée, le moyen de blocage de longueurs d'onde permettant à la lumière avec des longueurs d'onde du spectre visible, UVB et UVC de passer à travers le moyen de blocage de longueurs d'onde, dans lequel
la lumière comprenant au moins un des UVB et UVC est projetée du moyen d'émission de lumière sur la partie formant une surface pour que la substance photochromique induise le photochromisme et change une couleur de la partie formant une surface.

10. Système pour changer une couleur d'une partie formant une surface, le système comprenant:
une partie formant une surface avec une substance photochromique déposée sur une partie formant une surface d'un objet;
un moyen d'émission de lumière configuré pour émettre une lumière comprenant au moins un des UVB et UVC; et
un moyen d'application appliquant un moyen de blocage de longueurs d'onde à la partie formant une surface après que le moyen d'émission de lumière ait été contrôlé et que la substance photochromique ait subi un changement de couleur par photochromisme, le moyen de blocage de longueurs d'onde bloquant sélectivement une longueur d'onde d'UVA pour la partie formant une surface sur laquelle la substance photochromique a été déposée, le moyen de blocage de longueurs d'onde permettant à une lumière avec des longueurs d'onde du spectre visible, UVB et UVC de passer à travers le moyen de blocage de longueurs d'onde, dans lequel
la lumière comprenant au moins un des UVB et UVC est projetée du moyen d'émission de lumière sur la partie formant une surface pourque la substance photochromique induise un photochromisme et change une couleur de la partie formant une surface.

11. Système selon la revendication 9 ou 10, dans lequel la substance photochromique est un composé organique photochromique qui change sa couleur, lors de l'irradiation par une lumière avec des longueurs d'onde spécifiques dans un spectre ultraviolet, en une couleur dans une bande visible correspondant aux longueurs d'onde spécifiques irradiées, et revient à sa couleur d'origine lors de l'irradiation par une lumière dans une bande visible.

12. Système selon l'une quelconque des revendications 9 à 11, dans lequel la partie formant une surface est celle d'un des objets suivants: des ongles, des ongles artificiels, des lèvres, des poils sur le corps, y compris des cheveux sur la tête, des lunettes, des montres, des bijoux, y compris des bagues, des bracelets et des colliers, des sacs, des chaussures, des textiles, y compris des cravates, des foulards et des mouchoirs, des fibres naturelles et synthétiques, des carrosseries de véhicules, y compris des motocyclettes et des voitures, des matériaux pour des murs, des équipements pour l'intérieur, y compris des meubles et des ornements, des équipements pour l'extérieur, y compris des panneaux, et des surfaces des murs, y compris des plafonds, des sols et des murs latéraux des bâtiments.

13. Système selon l'une quelconque des revendications 9 à 12, dans lequel le moyen d'émission de lumière peut émettre de la lumière avec des longueurs d'onde spécifiques dans une bande comprise entre l'ultraviolet et l'infrarouge.

14. Système selon l'une quelconque des revendications 9 à 13, dans lequel le moyen de blocage de longueurs d'onde permet d'accorder les longueurs d'onde à bloquer par incréments de 20 nm et de les bloquer.

15. Procédé de changement d'une couleur d'un objet en ajoutant un motif graphique à un objet tridimensionnel, le procédé comprenant les étapes suivantes:
appliquer un composé photochromique à une surface d'un objet tridimensionnel tel qu'une carrosserie de voiture ;
numériser l'objet avec un scanner 3D pour obtenir des données de numérisation 3D et modéliser et analyser la forme de l'objet ;
mettre en correspondance l'objet analysé avec un motif graphique présélectionné;
irradier l'objet mis en correspondance avec une lumière comprenant au moins un des UVA et UVB pour changer une couleur du composé photochromique appliqué à l'objet, pendant ou après la mise en correspondance; et
recouvrir l'objet avec un moyen de blocage de longueurs d'onde qui bloque sélectivement une longueur d'onde d'UVA, après avoir irradié l'objet mis en correspondance avec une lumière ayant des longueurs d'onde spécifiques dans un spectre ultraviolet pour changer une couleur du composé photochromique qui a été appliqué à l'objet, pendant ou après la mise en correspondance, le moyen de blocage de longueurs d'onde permettant à la lumière ayant des longueurs d'onde du spectre visible, UVB et UVC de passer à travers le moyen de blocage de longueurs d'onde....

16. Procédé de changement une couleur d'un objet en ajoutant un motif graphique à un objet tridimensionnel, le procédé comprenant les étapes suivantes:
appliquer un composé photochromique à une surface d'un objet tridimensionnel tel qu'une carrosserie de voiture ;
numériser l'objet avec un scanner 3D pour obtenir des données de numérisation 3D et modéliser et analyser une forme d'objet ;
mettre en correspondance l'objet analysé avec un motif graphique présélectionné; et
recouvrir l'objet avec un moyen de blocage de longueurs d'onde qui bloque une longueur d'onde d'UVA avant que le composé photochromique subisse un changement de couleur, lorsque l'objet mis en correspondance est irradié avec une lumière comprenant au moins un des UVA et UVB pour changer une couleur du composé photochromique qui a été appliqué à l'objet, pendant ou après la mise en correspondance, le moyen de blocage de longueurs d'onde permettant à la lumière avec des longueurs d'onde du spectre visible, UVB et UVC de passer à travers le moyen de blocage de longueurs d'onde....

17. Procédé selon la revendication 15 ou 16, dans lequel l'objet tridimensionnel est un ongle, un ongle artificiel, une lèvre, des poils sur un corps y compris des cheveux sur une tête, des lunettes, une montre, des bijoux y compris une bague, un bracelet et un collier, un sac, des chaussures, un textile y compris une cravate, une écharpe, et un mouchoir, une fibre naturelle ou synthétique, une carrosserie de véhicule, y compris une moto et une voiture, un matériau pour des murs, un équipement pour l'intérieur, y compris un meuble et un ornement, un équipement pour l'extérieur, y compris un panneau, et une surface des murs, y compris un plafond, un plancher et un mur latéral d'un bâtiment.
